# EUROPEAN PATENT APPLICATION

(11) **EP 4 273 177 A1**
(43) Date of publication of application: **08.11.2023**
(21) Application number: 20966422.6
(22) Date of filing: 24.12.2020
(51) Int. Cl.: C08F 4/02

(54) **METHOD FOR PREPARING SUPPORTED OLEFIN POLYMERIZATION CATALYST, RESULTING CATALYST AND APPLICATION THEREOF**

(71) Applicant: Zhejiang University, Xihu District Hangzhou Zhejiang 310058 (CN)
(72) Inventor: WANG, Wen-Jun, HANGZHOU, Zhejiang 310058 (CN); LIU, Pingwei, HANGZHOU, Zhejiang 310058 (CN); LUO, Liqiong, HANGZHOU, Zhejiang 310058 (CN); WANG, Song, HANGZHOU, Zhejiang 310058 (CN); LI, Bo-Geng, HANGZHOU, Zhejiang 310058 (CN)
(74) Representative: Marturano, Pasqualino
(86) International application number: PCT/CN2020/138812
(87) International publication number: WO 2022/133849

(57) **Abstract**

A method for preparing a supported olefin polymerization catalyst, comprising: step 1, activating a COF at 0°C - 800°C for 0.1 - 48 hours under inert atmosphere or vacuum protection; optionally, step 2, reacting the activated COF with an auxiliary agent in a reaction medium at a temperature of 5°C - 120°C under inert atmosphere or vacuum protection, and performing solid-liquid separation to obtain a solid phase material, wherein the auxiliary agent is selected from a metal alkyl compound, boron halothane, an alkyl aluminum oxide, a modified methyl aluminoxane, a Lewis acid, and a Grignard reagent; and step 3, under inert atmosphere or vacuum protection, reacting the solid phase material with the olefin polymerization catalyst in a reaction medium at - 30°C - 150°C, performing solid-liquid separation, and collecting the solid phase material as the supported olefin polymerization catalyst. A supported olefin polymerization catalyst and an application thereof. The supported catalyst can maintain higher catalytic activity for a long time in olefin polymerization.

## Description

### Technical Field

The present invention belongs to the field of olefin polymerization, and in particular relates to a method for preparing a supported olefin polymerization catalyst, and also relates to the prepared catalyst and application thereof in olefin polymerization.

### Background Art

Polyolefin is one of the most important synthetic materials. The output of polyolefin accounts for 60% of the total output of synthetic resins. Therefore, the development of the polyolefin industry directly affects the national economy. The development of catalysts promotes the progress of the polyolefin industry. The discovery of Z-N catalysts in the 1950s and the discovery of sinn-kaminsky metallocene catalysts in the 1980s opened up a new era for the development of the polyolefin industry. Various kinds of high-performance post-metallocenes later discovered have further enriched the types of catalysts and improved the performance of polyolefin products.

Olefin polymerization catalysts include homogeneous catalysts and heterogeneous catalysts. Among them, homogeneous catalysts can effectively regulate the structure of polymer chains, and heterogeneous catalysts enable easy control of product morphology, higher apparent density, less sticking of reaction products to the reactor, and are suitable for most polymerization devices. In order to make homogeneous catalysts have the advantages of heterogeneous catalysts at the same time, the homogeneous catalysts need to be heterogenized, and the common methods are to immobilize homogeneous catalysts on support. The currently disclosed supports are generally inorganic materials such as silica, magnesium chloride, and alumina. There are a few studies on loading olefin polymerization catalysts on porous materials such as molecular sieves, for example, loading metallocene catalysts, Z-N catalysts, post-metallocene catalysts, etc. on silica supports, for another example, loading metallocene catalysts on molecular sieves. Loading the catalysts on inorganic materials generally leads to reduced catalytic activity, rapidly declined activity at high temperatures, and reduced selectivity. Therefore, there is an urgent need for a supported olefin polymerization catalyst with both the advantages of homogeneous catalysts and heterogeneous catalysts, high catalytic activity, and high selectivity.

Covalent organic frameworks (COF) are an emerging class of materials with advantages such as highly ordered pore structure, adjustable pore size, large specific surface area, high thermal stability, diverse synthesis methods, and easy functional modification.

### Contents of the present invention

One object of the present invention is to provide a method for preparing a supported olefin polymerization catalyst. The prepared supported catalyst can maintain high catalytic activity for a long time to catalyze homopolymerization or copolymerization of olefins. Another object of the present invention is to provide a supported olefin polymerization catalyst. Further another object of the present invention is to provide a use of the supported catalyst in olefin polymerization.

To achieve the above objects, the first aspect of the present invention relates to a method for preparing a supported olefin polymerization catalyst, which comprises Method I or Method II, wherein,

Method I comprises the following steps:
(1) under the protection of an inert atmosphere or vacuum, activating a COF at 0°C to 800°C (preferably 40°C to 800°C, or 50°C to 500°C, or 100°C to 400°C, such as 50°C, 80°C, 100°C, 120°C, 150°C, 180°C, 200°C, 230°C, 250°C, 280°C, 300°C, 350°C, 370°C, 400°C, 450°C, 500°C, 600°C, 700°C, 750°C) for 0.1 to 48 hours (preferably 2 to 50 hours, or 3 to 48 hours, such as 1 hour, 3 hours, 4 hours, 5 hours, 6 hours, 7 hours, 8 hours, 10 hours, 12 hours, 15 hours, 20 hours, 24 hours, 28 hours, 30 hours, 35 hours, 40 hours, 43 hours, 45 hours, 48 hours);
(2) under the protection of an inert atmosphere or vacuum, reacting the activated COF with an olefin polymerization catalyst at -30°C to 150°C (preferably -30°C to 100°C, or -20°C to 90°C, such as -20°C, -10°C, 0°C, 2°C, 5°C, 10°C, 20°C, 25°C, 30°C, 35°C, 40°C, 45°C, 50°C, 55°C, 60°C, 65°C, 70°C, 75°C, 80°C, 85°C, 90°C, 100°C, 105°C, 120°C, 130°C, 140°C) in a reaction medium, performing solid-liquid separation, collecting a solid phase, optionally washing and drying the solid phase sequentially, thereby obtaining a supported olefin polymerization catalyst;

Method II comprises the following steps:
1) under the protection of an inert atmosphere or vacuum, activating a COF at 0°C to 800°C (preferably 40°C to 800°C, or 50°C to 500°C, or 100°C to 400°C, such as 50°C, 80°C, 100°C, 120°C, 150°C, 180°C, 200°C, 230°C, 250°C, 280°C, 300°C, 350°C, 370°C, 400°C, 450°C, 500°C, 600°C, 700°C, 750°C) for 0.1 to 48 hours (preferably 2 to 50 hours, or 3 to 48 hours, such as 1 hour, 3 hours, 4 hours, 5 hours, 6 hours, 7 hours, 8 hours, 10 hours, 12 hours, 15 hours, 20 hours, 24 hours, 28 hours, 30 hours, 35 hours, 40 hours, 43 hours, 45 hours, 48 hours);
2) under the protection of an inert atmosphere or vacuum, reacting the activated COF with a promoter at 5°C to 120°C (preferably 10°C to 100°C, or 15°C to 90°C, such as 10°C, 15°C, 20°C, 25°C, 30°C, 40°C, 50°C, 60°C, 70°C, 80°C, 90°C, 100°C, 110°C) in a reaction medium, performing solid-liquid separation, and collecting a solid phase; wherein, the promoter is selected from the group consisting of metal alkyl compound (preferably, metal trialkyl compound, more preferably metal tri-C₁₋₆ alkyl compound), fluoro-borane (e.g., tris(pentafluorophenyl)borane), alkylaluminum oxide (preferably, C₁₋₆ alkylaluminum oxide, more preferably methylaluminoxane), modified methylaluminoxane, Lewis acid and Grignard reagent; optionally, washing the solid phase, and drying to obtain a dry product;
3) under the protection of an inert atmosphere or vacuum, reacting the solid phase or the optionally obtained dry product with an olefin polymerization catalyst at -30°C to 150°C (preferably, -30°C to 100°C, or -20°C to 90°C, such as -20°C, -10°C, 0°C, 2°C, 5°C, 10°C, 20°C, 25°C, 30°C, 35°C, 40°C, 45°C, 50°C, 55°C, 60°C, 65°C, 70°C, 75°C, 80°C, 85°C, 90°C, 100°C, 105°C, 120°C, 130°C, 140°C) in a reaction medium, performing solid-liquid separation, collecting a solid phase, optionally washing and drying the solid phase sequentially, thereby obtaining a supported olefin polymerization catalyst.

In some embodiments of the first aspect of the present invention, in step 2), the promoter is selected from the group consisting of methylaluminoxane, modified methylaluminoxane, ethylaluminoxane, trimethylaluminum, triethylaluminum, tris(pentafluorophenyl)borane, and triisobutylaluminum.

In some embodiments of the first aspect of the present invention, in step 2), the promoter is selected from the group consisting of methylaluminoxane, ethylaluminoxane, trimethylaluminum, triethylaluminum, and triisobutylaluminum.

In some embodiments of the first aspect of the present invention, in step 2), the weight ratio of the activated COF to the promoter is (0.05 to 30):1, preferably (0.05 to 25):1 or (0.1 to 20):1, such as 0.1:1, 0.2:1, 0.4:1, 0.5:1, 0.7:1, 1:1, 2:1, 3:1, 4:1, 5:1, 7:1, 10:1, 15:1, 20:1, 25:1.

In some embodiments of the first aspect of the present invention, in step 2), the ratio of the activated COF to the reaction medium is 1:(100 to 1000) g/mL, preferably 1:(300 to 700) g/mL, such as 1:200 g/mL, 1:300 g/mL, 1:500 g/mL, 1:700 g/mL, 1:800 g/mL.

In some embodiments of the first aspect of the present invention, the weight ratio of the activated COF to the olefin polymerization catalyst in step (2) is (0.05 to 120):1, or the weight ratio of the solid phase or the optionally obtained dry product in step 3) to the olefin polymerization catalyst is (0.05 to 120):1, preferably (0.1 to 100):1, such as 0.1:1, 0.2:1, 0.5:1, 1:1, 2:1, 4:1, 5:1, 10:1, 12.5:1, 20:1, 30:1, 100:3, 40:1, 50:1, 60:1, 70:1, 80:1, 90:1, 100:1, 110:1, 120:1.

In some embodiments of the first aspect of the present invention, in step (2) and/or step 3), the ratio of the olefin polymerization catalyst to the reaction medium is (0.001 to 1000):1 mg/mL, preferably (0.009 to 10):1 mg/mL, such as 0.005:1 mg/mL, 0.01:1 mg/mL, 0.02:1 mg/mL, 0.03:1 mg/mL, 0.04:1 mg/mL, 0.05:1 mg/mL, 0.06:1 mg/mL, 0.08:1 mg/mL, 0.09:1 mg/mL, 0.1:1 mg/mL, 0.2:1 mg/mL, 0.3:1 mg/mL, 1:3 mg/mL, 0.4: 1 mg/mL, 0.6:1 mg/mL, 1:1 mg/mL, 1.5:1 mg/mL, 2:1 mg/mL, 3:1 mg/mL, 4:1 mg/mL, 5:1 mg/mL, 6:1 mg/mL, 8:1 mg/mL, 20:1 mg/mL, 50:1 mg/mL, 100:1 mg/mL, 140:1 mg/mL, 200:1 mg /mL, 400:1 mg/mL, 500:1 mg/mL.

In some embodiments of the first aspect of the present invention, in step (1) and/or step 1), the COF is selected from the group consisting of imine-based COF (e.g., COF-LZU1, COF300, COF303), imide-based COF, borate ester-based COF (e.g., COF5), sp²-based COF, hydrazone-based COF, boroxine-based COF (e.g., COF1), borazine-based COF, triazine-based COF (e.g., CTF1), and phenazine-based COF.

In some embodiments of the first aspect of the present invention, in step (1) and/or step 1), the COF is selected from the group consisting of COF1, COF300, COF303, CTF1, COF5, and COF-LZU1, more preferably selected from the group consisting of COF1, COF300, COF303, and COF5.

Without being limited by theory, in step 2), the function of the activated COF reacting with the promoter is to remove an impurity in the activated COF, so as to facilitate the subsequent preparation of the supported olefin polymerization catalyst.

In the present invention, the imine-based COF, imide-based COF, borate ester-based COF, sp²-based COF, hydrazone-based COF, boroxine-based COF, borazine-based COF, triazine-based COF and phenazine-based COF refer to covalent organic framework materials bonded by structures such as imine, imide, borate ester, sp², hydrazone, boroxine, borazine, triazine, phenazine, respectively. Among them, the imine-based COF, imide-based COF, borate ester-based COF, sp²-based COF, hydrazone-based COF, boroxine-based COF, borazine-based COF, triazine-based COF and phenazine-based COF have bonding modes that include but are not limited to the following:

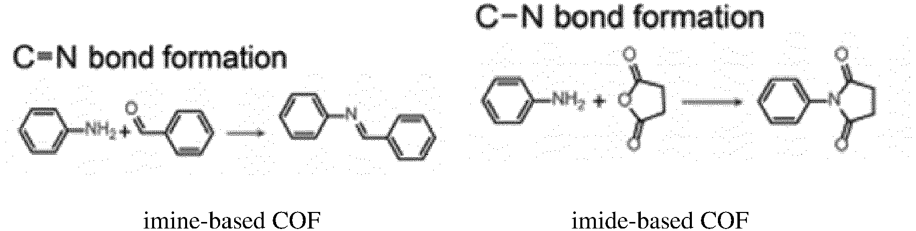

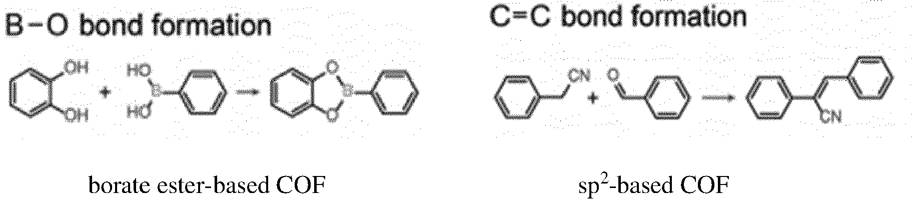

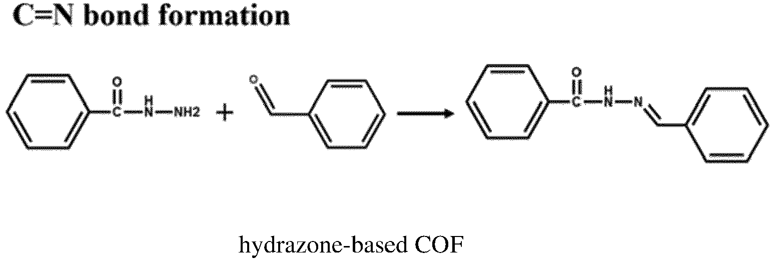

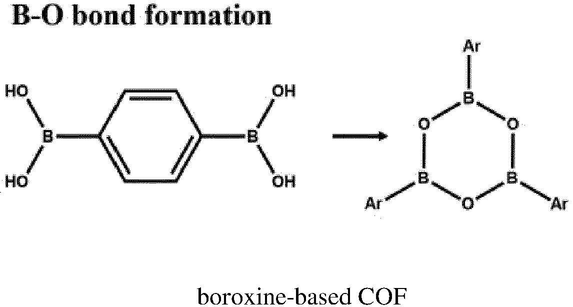

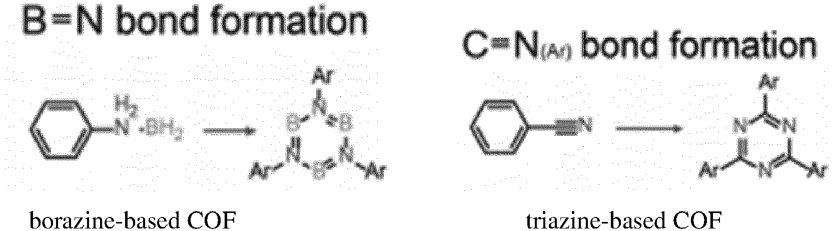

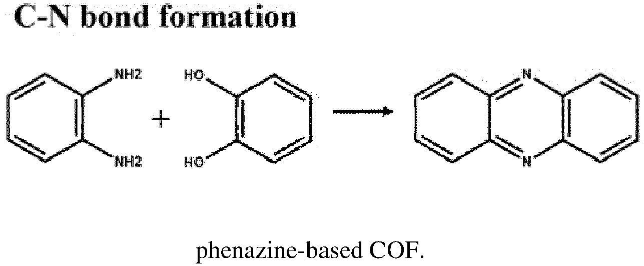

In the present invention, the structures of COF1, COF300, COF303, CTF1, COF5 and COF-LZU1 are as follows:

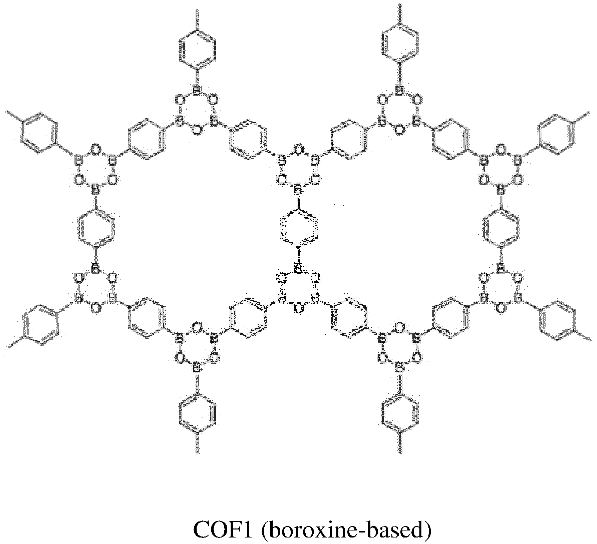

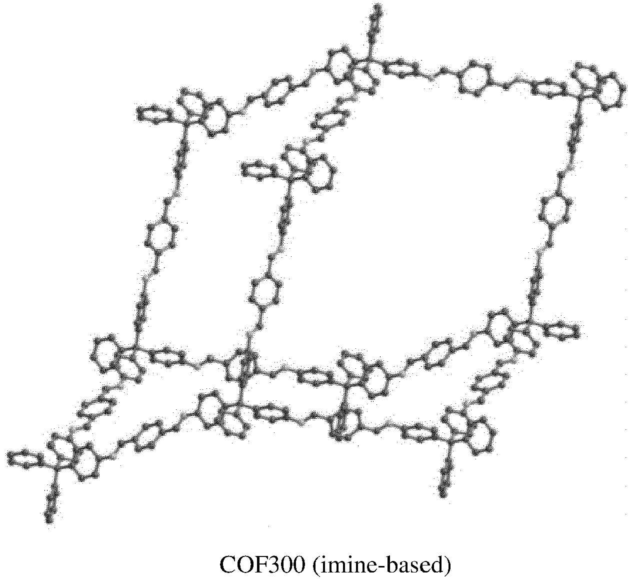

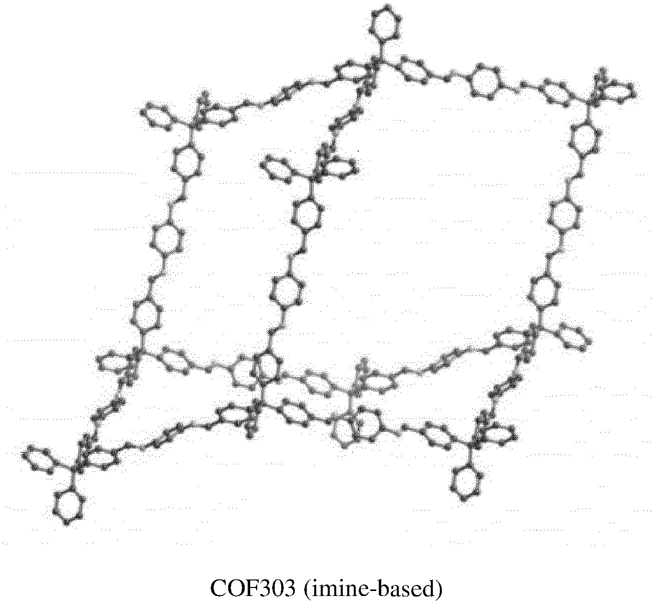

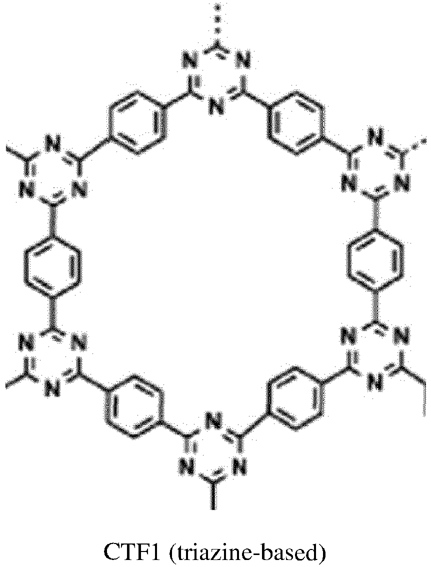

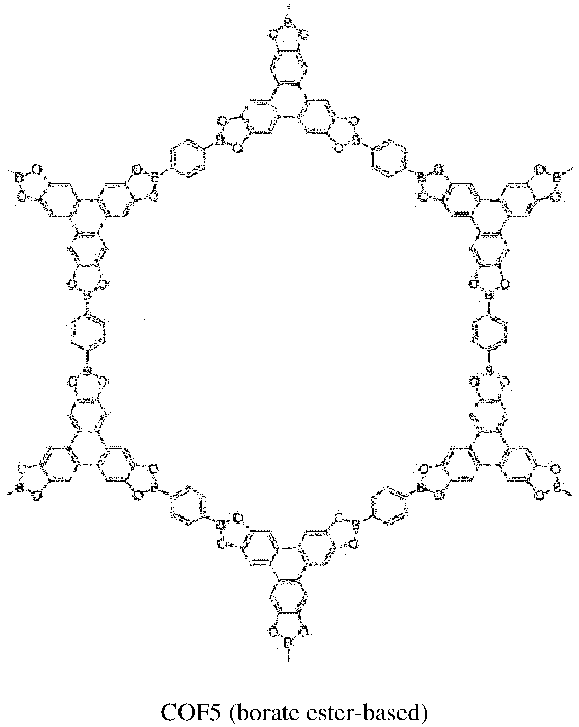

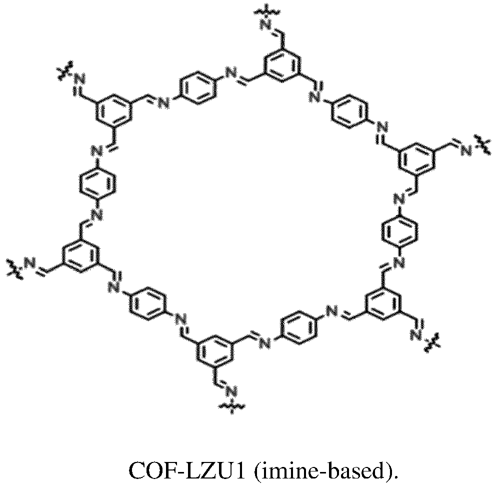

In the present invention, COF1, COF300, COF303, CTF1, COF5, and COF-LZU1 are prepared according to conventional methods.

In some embodiments of the first aspect of the present invention, COF1 is prepared by the following steps:
mixing benzene-1,4-diboronic acid with a mixed solution of mesitylene-dioxane, and reacting at 100°C to 150°C for 50 to 90 hours to obtain COF1;
preferably, the volume ratio of benzene-1,4-diboronic acid to the mixed solution is 1:(10 to 20);
preferably, the volume ratio of mesitylene to dioxane in the mixed solution is 1:1.

In some embodiments of the first aspect of the present invention, COF5 is prepared by the following steps:
mixing 2,3,6,7,10,11-hexahydroxytriphenylene, benzene-1,4-diboronic acid and a mixed solution of mesitylene-dioxane, and reacting at 100°C to 150°C for 50 to 90 hours to obtain COF5;
preferably, the weight ratio of 2,3,6,7,10,11-hexahydroxytriphenylene to benzene-1,4-diboronic acid is (1 to 3):1;
preferably, the volume ratio of mesitylene to dioxane in the mixed solution is 1:1;
preferably, the ratio of benzene-1,4-diboronic acid to the mixed solution is 0.001 to 0.01 g/ml.

In some embodiments of the first aspect of the present invention, COF300 is prepared by the following steps:
mixing tetrakis(4-aminophenyl)methane, 1,4-phthalaldehyde and a mixed solution of acetic acid-dioxane, and reacting at 100°C to 150°C for 50 to 90 hours to obtain COF300;
preferably, the weight ratio of tetrakis(4-aminophenyl)methane to 1,4-phthalaldehyde is (0.1 to 1):1;
preferably, the volume ratio of acetic acid to dioxane in the mixed solution is (1 to 3): 1;
preferably, the ratio of tetrakis(4-aminophenyl)methane to the mixed solution is 0.005 to 0.02 g/ml.

In some embodiments of the first aspect of the present invention, COF303 is prepared by the following steps:
mixing tetrakis(4-formylphenyl)methane, 1,4-diaminobenzene and a mixed solution of mesitylene-dioxane, and reacting at room temperature for 100 to 150 hours to obtain COF303;
preferably, the weight ratio of tetrakis(4-formylphenyl)methane to 1,4-diaminobenzene is 1:(1 to 3);
preferably, the volume ratio of mesitylene to dioxane in the mixed solution is (1 to 3):1;
preferably, the ratio of tetrakis(4-formylphenyl)methane to the mixed solution is 0.005 to 0.02 g/ml.

In some embodiments of the first aspect of the present invention, the olefin polymerization catalyst is selected from the group consisting of Z-N catalyst, metallocene catalyst and post-metallocene catalyst.

In some embodiments of the first aspect of the present invention, the Z-N catalyst is selected from (includes but is not limited to), titanium tetrachloride, titanium trichloride, zirconium trichloride, and vanadium trichloride.

In some embodiments of the first aspect of the present invention, the metallocene catalyst is selected from (includes but is not limited to) zirconocene dichloride, biscyclopentadienyl dimethyl hafnium, bis(indenyl) dimethyl zirconium, rac-vinylidene-bridged bis(indenyl) zirconium dichloride, dimethylsilylene-bridged bis(indenyl), diphenylcarbene-bridged cyclopentadienyl-fluorenyl zirconium dichloride, dimethylsilylene-bridged tetramethylcyclopentadienyl-tert-butylamino-dimethyl titanium, bis(indenyl) zirconium dichloride, bis[2-(3',5'-di(tert-butyl)phenyl)-indenyl] zirconium dichloride, bis(2-methyl-4,5-phenyl-indenyl) zirconium dichloride, biscyclopentadienyl-bis(phenoxy) zirconium, dimethylsilylene-bridged bis(indenyl) zirconium dichloride, diphenylcarbene-bridged cyclopentadienyl-fluorenyl zirconium dichloride, diphenylcarbene-bridged cyclopentadienyl-(2-dimethylamino-fluorenyl) zirconium dichloride, dimethylsilylene-bridged tetramethylcyclopentadienyl-tert-butylamino-dimethyl titanium, dimethylsilylene-bridged 3-pyrrolylindenyl-tert-butylamino-dimethyl titanium, rac-dimethylsilylene-bridged bis(2-methylindenyl) zirconium dichloride and dimethylsilylene-bridged fluorenyl-tert-butylamino-dimethyl titanium.

In some embodiments of the first aspect of the present invention, the post-metallocene catalyst is selected from (includes but is not limited to) imine-amine-based catalyst, ketimine-based catalyst, amidine-based catalyst, diimine palladium/nickel-based catalyst, phenoxyimine-based catalyst.

In some embodiments of the first aspect of the present invention, the imine-amine-based catalyst is selected from (includes but is not limited to) Compound 26, Compound 27, Compound 28, Compound 29a, Compound 29b, Compound 30a, Compound 30b, Compound 31a, Compound 31b, Compound 32, Compound 33a, Compound 33b as shown in the following structural formulas:

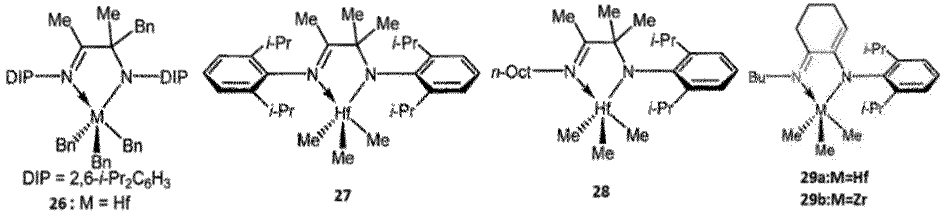

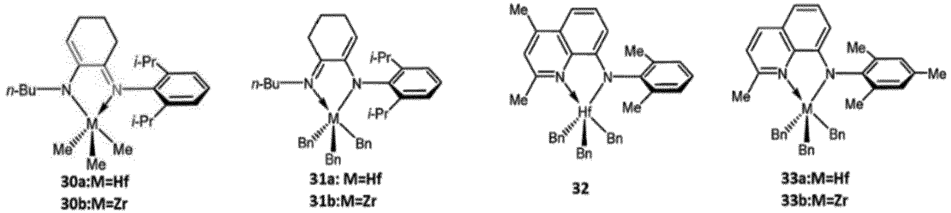

In some embodiments of the first aspect of the present invention, the ketimine-based catalyst is selected from (includes but is not limited to) Compound 40 as shown in the following structural formula:

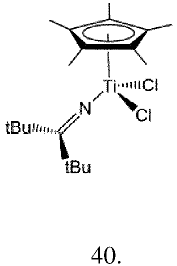

In some embodiments of the first aspect of the present invention, the amidine-based catalyst is selected from (includes but is not limited to) Compound 41 and Compound 42 as shown in the following structural formulas:

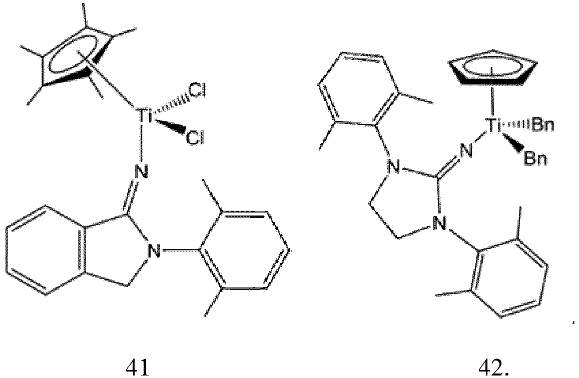

In some embodiments of the first aspect of the present invention, the diimine palladium/nickel-based catalyst is selected from (includes but is not limited to) Compound 43 and Compound 44 as shown in the following structural formulas:

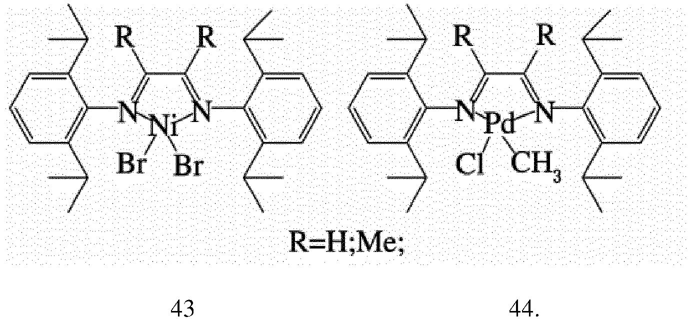

In some embodiments of the first aspect of the present invention, the phenoxyimine-based catalyst is selected from (includes but is not limited to) Compounds 45 to 48 represented by the following structural formulas:

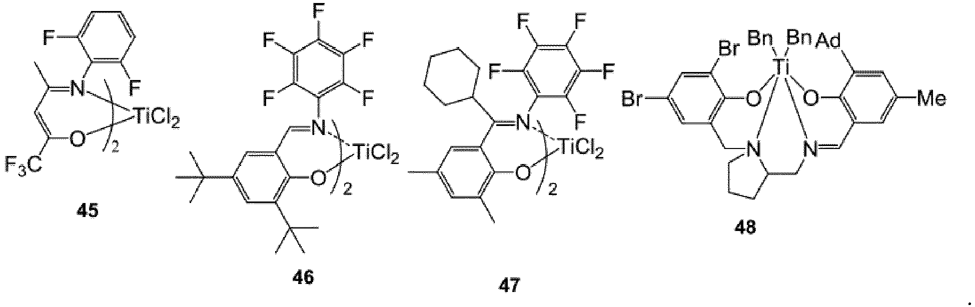

In some embodiments of the first aspect of the present invention, in step (2) and/or step 3), the olefin polymerization catalyst is selected from the group consisting of titanium tetrachloride, titanium trichloride, zirconium trichloride, vanadium trichloride, zirconocene dichloride, biscyclopentadienyl dimethyl hafnium, bis(indenyl) dimethyl zirconium, rac-vinylidene-bridged bis(indenyl) zirconium dichloride, dimethylsilylene-bridged bis(indenyl), diphenyl carbene-bridged cyclopentadienyl-fluorenyl zirconium dichloride, dimethylsilylene-bridged tetramethylcyclopentadienyl-tert-butylamino-dimethyl titanium, bis(indenyl) zirconium dichloride, bis[2-(3',5'-di(tert-butyl)phenyl)-indenyl] zirconium dichloride, bis(2-methyl-4,5-phenyl-indenyl) zirconium dichloride, biscyclopentadienyl-bis(phenoxy) zirconium, dimethylsilylene-bridge bis(indenyl) zirconium dichloride, diphenyl carbene-bridged cyclopentadienyl-fluorenyl zirconium dichloride, diphenyl carbene-bridged cyclopentadienyl-(2-dimethylamino-fluorenyl) zirconium dichloride, dimethylsilylene-bridged tetramethylcyclopentadienyl-tert-butylamino-dimethyl titanium, dimethylsilylene-bridged 3-pyrrolylindenyl-tert-butylamino-dimethyl titanium, rac-dimethylsilylene-bridged bis(2-methylindenyl) zirconium dichloride and dimethylsilylene-bridged fluorenyl-tert-butylamino-dimethyl titanium, imine-amine-based catalyst, ketimine-based catalyst, amidine-based catalyst, diimine palladium/nickel-based catalyst and phenoxyimine-based catalyst.

In some embodiments of the first aspect of the present invention, in step (2) and/or step 3), the olefin polymerization catalyst is selected from the group consisting of titanium tetrachloride, titanium trichloride, zirconium trichloride, vanadium trichloride, zirconocene dichloride, biscyclopentadienyl dimethyl hafnium, bis(indenyl) dimethyl zirconium, rac-vinylidene-bridged bis(indenyl) zirconium dichloride, dimethylsilylene-bridged bis(indenyl), diphenyl carbene-bridged cyclopentadienyl-fluorenyl zirconium dichloride, dimethylsilylene-bridged tetramethylcyclopentadienyl-tert-butylamino-dimethyl titanium, bis(indenyl) zirconium dichloride, bis[2-(3',5'-di(tert-butyl)phenyl)-indenyl] zirconium dichloride, bis(2-methyl-4,5-phenyl-indenyl) zirconium dichloride, biscyclopentadienyl-bis(phenoxy) zirconium, dimethylsilylene-bridge bis(indenyl) zirconium dichloride, diphenyl carbene-bridged cyclopentadienyl-fluorenyl zirconium dichloride, diphenyl carbene-bridged cyclopentadienyl-(2-dimethylamino-fluorenyl) zirconium dichloride, dimethylsilylene-bridged tetramethylcyclopentadienyl-tert-butylamino-dimethyl titanium, dimethylsilylene-bridged 3-pyrrolylindenyl-tert-butylamino-dimethyl titanium, rac-dimethylsilylene-bridged bis(2-methylindenyl) zirconium dichloride and dimethylsilylene-bridged fluorenyl-tert-butylamino-dimethyl titanium, Compound 26, Compound 27, Compound 28, Compound 29a, Compound 29b, Compound 30a, Compound 30b, Compound 31a, Compound 31b, Compound 32, Compound 33a, Compound 33b and Compound 40-48; wherein, Compound 26, Compound 27, Compound 28, Compound 29a, Compound 29b, Compound 30a, Compound 30b, Compound 31a, Compound 31b, Compound 32, Compound 33a, Compound 33b, Compounds 40 to 48 are represented by the previous structural formulas.

In some embodiments of the first aspect of the present invention, in step (2) and/or step 3), the olefin polymerization catalyst is selected from the group consisting of titanium tetrachloride, titanium trichloride, zirconocene dichloride, silyl(N-tert-butylamino) (tetramethylcyclopentadienyl) titanium dichloride, phenoxyimine zirconium, rac-dimethylsilylene-bridged bis(2-methylindenyl) zirconium dichloride, dimethylsilylene-bridged-fluorenyl-tert-butylamino-dimethyl titanium, rac-vinylidene-bridged bis(indenyl) zirconium dichloride, diimine palladium, phenoxyimine titanium and diimine nickel.

In some embodiments of the first aspect of the present invention, in step (2) and/or step 3), the olefin polymerization catalyst is selected from the group consisting of titanium tetrachloride, titanium trichloride, zirconocene dichloride, silyl(N-tert-butylamino) (tetramethylcyclopentadienyl) titanium dichloride, phenoxyimine zirconium, diimine palladium, phenoxyimine titanium, and diimine nickel.

In some embodiments of the first aspect of the present invention, the reaction medium in step (2) and steps 2) to 3) is a non-polar organic solvent.

In some embodiments of the first aspect of the present invention, the reaction medium in step (2) and steps 2) to 3) is independently one selected from the group consisting of aliphatic compounds containing 5-12 carbon atoms, cycloaliphatic compounds containing 6-12 carbon atoms, aromatic compounds containing 6-12 carbon atoms and halides thereof, and ether compounds containing 4-12 carbon atoms; or a mixture thereof.

In some embodiments of the first aspect of the present invention, the reaction medium in step (2) and steps 2) to 3) is independently one selected from the group consisting of n-hexane, n-heptane, n-octane, n-dodecane, cyclohexane, toluene, xylene, mesitylene, chlorobenzene, 1,2,4-trichlorobenzene and diethyl ether; or a mixture thereof; preferably, the reaction medium in step (1-2) and step (2) is independently one selected from the group consisting of chlorobenzene, n-hexane, cyclohexane, n-heptane and isooctane; or a mixture thereof.

In some embodiments of the first aspect of the present invention, the reaction medium in step 2) is selected from the group consisting of chlorobenzene, n-hexane and isooctane.

In some embodiments of the first aspect of the present invention, the reaction medium in step (2) and/or step 3) is selected from the group consisting of chlorobenzene, n-hexane, cyclohexane and n-heptane.

In some embodiments of the first aspect of the present invention, the inert atmosphere in step (2) and steps 2) to 3) is independently selected from the group consisting of nitrogen, argon and helium, preferably nitrogen.

In some embodiments of the first aspect of the present invention, the inert atmosphere in step (1) and step 1) is independently selected from the group consisting of nitrogen, argon, helium and supercritical carbon dioxide, preferably nitrogen.

In some embodiments of the first aspect of the present invention, it is characterized by one or more of the following 1) to 8):
1) in step 2), the reaction is carried out for a time period of 0.5 to 90 hours, preferably 2 to 80 hours, or 4 to 72 hours, such as 1 hour, 4 hours, 10 hours, 12 hours, 20 hours, 25 hours, 30 hours, 35 hours, 40 hours, 48 hours, 50 hours, 55 hours, 60 hours, 65 hours, 70 hours, 72 hours, 80 hours, 90 hours;
2) in step 2), the washing is carried out with toluene;
3) in step 2), the drying is carried out at a temperature of 40°C to 70°C, preferably 50°C;
4) in step (2) and/or step 3), the reaction is carried out for a time period of 0.1 to 110 hours, preferably 1 to 110 hours, or 4 to 100 hours, such as 0.5 hours, 1 hour, 4 hours, 10 hours, 12 hours, 20 hours, 24 hours, 30 hours, 40 hours, 48 hours, 50 hours, 60 hours, 65 hours, 70 hours, 72 hours, 80 hours, 85 hours, 90 hours, 96 hours, 100 hours, 110 hours;
5) in step (2) and/or step 3), the washing is carried out with toluene;
6) in step (2) and/or step 3), the drying is carried out under vacuum conditions;
7) in step (2) and/or step 3), the drying is carried out at a temperature of 40°C to 70°C, preferably 50°C;
8) in step (2) and steps 2) to 3), the solid-liquid separation is carried out by filtration.

The second aspect of the present invention relates to a supported olefin polymerization catalyst prepared by the method described in the first aspect of the present invention.

In some embodiments of the second aspect of the present invention, the supported olefin polymerization catalyst has a polymerization activity of 10³ to 10¹⁰ g polymer/g cat·bar·h, preferably 10³ to 10⁹ g polymer/g cat-bar-h, such as 3.1×10³ g polymer/g cat-bar-h, 1.3×10⁴ g polymer/g cat-bar-h, 1.46×10⁴ g polymer/g cat-bar-h, 3.83×10⁴ g polymer/g cat-bar-h, 4.4×10⁴ g polymer/g cat-bar-h, 5.3×10⁴ g polymer/g cat-bar-h, 5.92×10⁴ g polymer/g cat·bar·h, 6×10⁴ g polymer/g cat-bar-h, 6.8×10⁴ g polymer/g cat-bar-h, 3.25×10⁵ g polymer/g cat-bar-h, 4.4×10⁵ g polymer/g cat-bar-h, 4.7×10⁵ g polymer/g cat-bar-h, 5.2×10⁵ g polymer/g cat-bar-h, 5.92×10⁵ g polymer/g cat-bar-h, 6.6×10⁵ g polymer/g cat-bar-h, 7.4×10⁵ g polymer/g cat-bar-h, 9.1×10⁵ g polymer/g cat-bar-h, 1.3×10⁶ g polymer/g cat-bar-h, 2×10⁶ g polymer/g cat-bar-h, 2.3×10⁶ g polymer/g cat-bar-h, 4.1×10⁶ g polymer/g cat-bar-h, 6.2×10⁶ g polymer/g cat.bar.h, 4.25×10⁷ g polymer/g cat-bar-h, 6.1×10⁷ g polymer/g cat-bar-h, 7.9×10⁸ g polymer/g cat-bar-h at 0°C to 200°C (preferably 20°C to 200°C, such as 40°C, 50°C, 60°C, 70°C, 80°C, 90°C, 100°C, 120°C, 140°C, 150°C, 160°C, 180°C).

In some embodiments of the second aspect of the present invention, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms.

In some embodiments of the second aspect of the present invention, the olefin is selected from the group consisting of ethylene, propylene, 1-butene, butadiene, 1-hexene, 1-octene, and styrene.

The third aspect of the present invention relates to a catalyst product for olefin polymerization, comprising the supported olefin polymerization catalyst described in the second aspect of the present invention and optionally a co-catalyst.

In some embodiments of the third aspect of the present invention, the co-catalyst is selected from the group consisting of triethylaluminum, methylaluminoxane, triisobutylaluminum and modified methylaluminoxane.

In some embodiments of the third aspect of the present invention, the weight ratio of the supported olefin polymerization catalyst to the co-catalyst is 1:(1-125), for example, 1:25, 3:100.

The fourth aspect of the present invention relates to a method for olefin polymerization, comprising using the supported olefin polymerization catalyst described in the second aspect of the present invention or the catalyst product described in the third aspect of the present invention to catalyze olefin polymerization.

In some embodiments of the fourth aspect of the present invention, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms.

In some embodiments of the fourth aspect of the present invention, the olefin is selected from the group consisting of ethylene, propylene, 1-butene, butadiene, 1-hexene, 1-octene, and styrene.

In some embodiments of the fourth aspect of the present invention, the olefin polymerization is selected from the group consisting of olefin gas-phase polymerization, olefin solution polymerization, olefin bulk polymerization and olefin slurry polymerization.

The fifth aspect of the present invention relates to a use of the supported olefin polymerization catalyst described in the second aspect of the present invention or the catalyst product described in the third aspect of the present invention in catalyzing olefin polymerization.

In some embodiments of the fifth aspect of the present invention, the olefin polymerization is selected from the group consisting of olefin gas-phase polymerization, olefin solution polymerization, olefin bulk polymerization and olefin slurry polymerization.

In some embodiments of the fifth aspect of the present invention, the olefin is selected from the group consisting of ethylene, propylene, linear or branched α-olefin containing 4-20 carbon atoms, conjugated diene containing 4-20 carbon atoms, non-conjugated containing 5-20 carbon atoms, cycloolefin containing 5-20 carbon atoms, and arylethylene containing 5-20 carbon atoms.

In some embodiments of the fifth aspect of the present invention, the olefin is selected from the group consisting of ethylene, propylene, 1-butene, butadiene, 1-hexene, 1-octene and styrene.

Another aspect of the present invention relates to the supported olefin polymerization catalyst described in the second aspect of the present invention or the catalyst product described in the third aspect of the present invention, for use in catalyzing olefin polymerization.

In some embodiments of the present invention, the olefin polymerization is selected from the group consisting of olefin gas-phase polymerization, olefin solution polymerization, olefin bulk polymerization and olefin slurry polymerization.

In some embodiments of the present invention, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms.

In some embodiments of the present invention, the olefin is selected from the group consisting of ethylene, propylene, 1-butene, butadiene, 1-hexene, 1-octene and styrene.

In the present invention, the CAS number of the modified methylaluminoxane is 206451-54-9.

In the present invention, "rac" refers to a racemate.

The present invention has obtained the following beneficial technical effects:
The supported olefin polymerization catalyst prepared by the method of the present invention can maintain high catalytic activity for a long time to catalyze the olefin polymerization reaction and promote the development of the olefin polymerization industry.

### Specific Models for Carrying Out the present invention

The embodiments of the present invention will be clearly and completely described below in conjunction with the examples. Apparently, the described examples are only some of the examples of the present invention, not all of them. The following description of at least one exemplary example is merely illustrative in nature and in no way taken as limiting the present invention, its application or uses. Based on the examples of the present invention, all other examples obtained by persons of ordinary skill in the art without creative efforts fall within the protection scope of the present invention.

### Example 1

(1) Preparation of COF1-supported titanium tetrachloride catalyst:
   Into a mixed solution of 40 ml of mesitylene and 40 ml of dioxane, 5 ml of benzene-1,4-diboronic acid was added, and reacted at 120°C for 72 hours to obtain COF1; COF1 was activated at 300°C under vacuum conditions for 6h; under the protection of nitrogen atmosphere, 1 g of the activated COF1 and 500 mg of trimethylaluminum were dispersed into 500 ml of n-hexane, stirred and reacted at 25°C for 48 hours, filtered, washed with toluene, and dried at 50°C to obtain pretreated COF1; in a glove box filled with nitrogen, 500 mg of the pretreated COF1, 50 mg of titanium tetrachloride and 500 ml of chlorobenzene were mixed, stirred and reacted at 0°C for 72 hours, filtered, washed with toluene, and dried under vacuum at 50°C to obtain a COF1-supported titanium tetrachloride catalyst.
(2) Use of catalyst in ethylene slurry homopolymerization:
   A 2-liter autoclave was vacuumized at 140°C for 3 hours, 1.5L of n-hexane was added into the autoclave, the ethylene pressure in the autoclave was adjusted to 40bar, the temperature in the autoclave was adjusted to 50°C, and then 20 mg of the prepared COF1-supported titanium tetrachloride catalyst and 500 mg of triethylaluminum were added, and reacted for 0.5 hours to obtain a polyethylene product with a polymerization activity of 6.3×10⁶ g polymer/g cat-bar-h.

### Example 2

(1) Preparation of COF1-supported titanium trichloride catalyst:
   COF1 (prepared according to the method in step (1) of Example 1) was activated at 400°C under nitrogen conditions for 6 hours. In a glove box filled with nitrogen, 100 mg of the activated COF1 and 5 mg of titanium trichloride were dispersed into 500 ml of n-hexane, stirred and reacted at 60°C for 72 hours, filtered, washed with toluene, and dried under vacuum at 50°C to obtain a COF1-supported titanium trichloride catalyst.
(2) Use of catalyst in propylene slurry homopolymerization:
   A 2-liter autoclave was vacuumized at 140°C for 3 hours, 1.5 L of n-hexane was added into the autoclave, the pressure of propylene in the autoclave was adjusted to 15 bar, the temperature in the autoclave was adjusted to 60°C, and then 15 mg of the prepared COF1-supported titanium trichloride catalyst and 500 mg of triethylaluminum were added, and reacted for 0.5 hours to obtain polypropylene product with a polymerization activity of 4.3×10⁵ g polymer/g cat-bar-h.

### Example 3

(1) Preparation of COF1-supported dimethylsilylene-bridged- tetramethylcyclopentadienyl-tert-butylamino-dimethyl titanium catalyst:
   COF1 (prepared according to the method in step (1) of Example 1) was activated at 250°C under vacuum conditions for 12 hours; under the protection of nitrogen atmosphere, 1 g of the activated COF1 and 1 g of triisobutylaluminum were dispersed into 500 ml of chlorobenzene, stirred and reacted at 90°C for 12 hours, filtered, washed with toluene, and dried at 50°C to obtain pretreated COF1; in a nitrogen-filled glove box, 500 mg of the pretreated COF1, 5 mg of dimethylsilylene-bridged-tetramethylcyclopentadienyl-tert-butylamino-dimethyl titanium were dispersed in 500 ml of cyclohexane, stirred and reacted at 0°C for 72 hours, filtered, washed with toluene, and dried under vacuum at 50°C to obtain a COF1-supported dimethylsilylene-bridged-tetramethylcyclopentadienyl-tert-butylamino-dimethyl titanium catalyst.
(2) Use of catalyst in ethylene slurry homopolymerization:
   A 2-liter autoclave was vacuumized at 140°C for 3 hours, 1.5L of n-hexane was added into the autoclave, the ethylene pressure in the autoclave was adjusted to 40bar, the temperature in the autoclave was adjusted to 50°C, and then 100 mg of the prepared COF1-supported dimethylsilylene-bridged-tetramethylcyclopentadienyl-tert-butylamino-dimethyl titanium catalyst was added, and reacted for 0.5 hours to obtain a polyethylene product with a polymerization activity of 8.2×10⁶ g polymer/g cat-bar-h.

### Example 4

(1) Preparation of COF1-supported dimethylsilylene-bridged- tetramethylcyclopentadienyl-tert-butylamino-dimethyl titanium catalyst:
   COF1 (prepared according to the method in step (1) of Example 1) was activated at 300°C under vacuum conditions for 8 hours; under the protection of a nitrogen atmosphere, 1 g of the activated COF1 and 500 mg of trimethylaluminum were dispersed into 500 ml of isooctane, stirred and reacted at 40°C for 72 hours, filtered, washed with toluene, and dried at 50°C to obtain pretreated COF1. In a nitrogen-filled glove box, 500 mg of the pretreated COF1, 1 g of dimethylsilylene-bridged-tetramethylcyclopentadienyl-tert-butylamino-dimethyl titanium were dispersed in 500 ml of cyclohexane, stirred and reacted at 50°C for 12 h, filtered, washed with toluene, and dried at 50°C to obtain a COF1-supported dimethylsilylene-bridged-tetramethylcyclopentadienyl-tert-butylamino-dimethyl titanium catalyst.
(2) Use of catalyst in propylene solution homopolymerization:
   A 2-liter autoclave was vacuumized at 140°C for 3 hours, 1.5L of n-hexane was added into the autoclave, the propylene pressure in the autoclave was adjusted to 15bar, the temperature in the autoclave was adjusted to 50°C, and then 5 mg of the prepared COF1-supported dimethylsilylene-bridged-tetramethylcyclopentadienyl-tert-butylamino-dimethyl titanium catalyst was added, and reacted for 0.5 hours to obtain a polypropylene product with a polymerization activity of 3.25×10⁶ g polymer/g cat-bar-h.

### Example 5

(1) Preparation of COF1-supported dimethylsilylene-bridged- tetramethylcyclopentadienyl-tert-butylamino-dimethyl titanium catalyst:
   COF1 (prepared according to the method in step (1) of Example 1) was activated at 300°C under vacuum conditions for 6 hours; under the protection of nitrogen atmosphere, 1 g of the activated COF1 and 50 mg of methylaluminoxane were dispersed into 500 ml of n-hexane, stirred and reacted at 25°C for 48 hours, filtered, washed with toluene, and dried at 50°C to obtain pretreated COF1. In a nitrogen-filled glove box, 500 mg of the pretreated COF1, 15 mg of dimethylsilylene-bridged-tetramethylcyclopentadienyl-tert-butylamino-dimethyl titanium were dispersed in 500 ml of cyclohexane, stirred and reacted at 25°C for 96 h, filtered, washed with toluene, and dried at 50°C to obtain a COF1-supported dimethylsilylene-bridged-tetramethylcyclopentadienyl-tert-butylamino-dimethyl titanium catalyst.
(2) Use of catalyst in ethylene/1-octene solution copolymerization:
   A 2-liter autoclave was vacuumized at 140°C for 3 hours, 1.5 L of n-hexane was added into the autoclave, the ethylene pressure in the autoclave was adjusted to 35 bar, the temperature in the autoclave was adjusted to 60°C, and then 15 mg of the prepared COF1-supported dimethylsilylene-bridged-tetramethylcyclopentadienyl-tert-butylamino-dimethyl titanium catalyst, 100 mg of methylaluminoxane and 50 ml of octene were added and reacted for 1h to obtain an ethylene/octene copolymer with a polymerization activity of 5.2×10⁶ g polymer/g cat-bar-h.

### Example 6

(1) Preparation of COF1-supported zirconocene dichloride catalyst:
   COF1 (prepared according to the method in step (1) of Example 1) was activated at 100°C under argon conditions for 3 hours. In a glove box filled with nitrogen, 100 mg of the activated COF1 and 500 mg of zirconocene dichloride were dispersed into 500 ml of n-hexane, stirred and reacted at 40°C for 72 hours, filtered, washed with toluene, and dried at 50°C to obtain a COF1-supported zirconocene dichloride catalyst.
(2) Use of catalyst in ethylene slurry polymerization:
   A 2-liter autoclave was vacuumized at 140°C for 3 hours, 1.5 L of n-hexane was added into the autoclave, the ethylene pressure in the autoclave was adjusted to 15 bar, the temperature in the autoclave was adjusted to 60°C, and then 5 mg of the prepared COF1-supported zirconocene dichloride catalyst and 300 mg of triethylaluminum were added, and reacted for 1 hour to obtain a polyethylene product with a polymerization activity of 9.1×10⁶ g polymer/g cat-bar-h.

### Example 7

(1) Preparation of COF1-supported zirconocene dichloride catalyst:
   COF1 (prepared according to the method in step (1) of Example 1) was activated at 300°C under vacuum conditions for 6 hours; under the protection of a nitrogen atmosphere, 1 g of the activated COF1 and 5 g of trimethylaluminum were dispersed into 500 ml of n-hexane, stirred and reacted at 40°C for 4 hours, filtered, washed with toluene, and dried at 50°C to obtain pretreated COF1; in a nitrogen-filled glove box, 500 mg of the pretreated COF1 and 10 mg of zirconocene dichloride were dispersed into 500 ml of chlorobenzene, stirred and reacted at -20°C for 24 hours, filtered, washed with toluene, and dried at 50°C to obtain a COF1-supported zirconocene dichloride catalyst.
(2) Use of catalyst in propylene slurry polymerization:
   A 2-liter autoclave was vacuumized at 140°C for 3 hours, 1.5L of cyclohexane was added into the autoclave, the pressure of propylene in the autoclave was adjusted to 35bar, the temperature in the autoclave was adjusted to 50°C, and then 200 mg of the prepared COF1-supported zirconocene dichloride catalyst and 800 mg of methylaluminoxane were added, and reacted for 0.5 hours to obtain a polypropylene product with a polymerization activity of 7.4×10⁶ g polymer/g cat·bar·h.

### Example 8

(1) Preparation of COF1-supported zirconocene dichloride catalyst:
   COF1 (prepared according to the method in step (1) of Example 1) was activated at 200°C under vacuum conditions for 48 hours; under the protection of a nitrogen atmosphere, 1 g of the activated COF1 and 10 g of ethylaluminoxane were dispersed into 500 ml of n-hexane, stirred and reacted at 15°C for 12 hours, filtered, washed with toluene, and dried at 50°C to obtain pretreated COF1; in a glove box filled with nitrogen, 500 mg of the pretreated COF1 and 100 mg of zirconocene dichloride were dispersed in 500 ml of n-heptane, stirred and reacted at 80°C for 4 hours, filtered, washed with toluene, and dried at 50°C to obtain a COF1-supported zirconocene dichloride catalyst.
(2) Use of catalyst in ethylene/1-octene solution polymerization:
   A 2-liter autoclave was vacuumized at 140°C for 3 hours, 1.5 L of toluene was added to the autoclave, the ethylene pressure in the autoclave was adjusted to 20 bar, the temperature in the autoclave was adjusted to 50°C, and then 10 mg of the prepared COF1-supported zirconocene dichloride catalyst, 500 mg of triethylaluminum and 50 ml of octene were added, and reacted for 0.5 hours to obtain an ethylene/octene copolymer with a polymerization activity of 9.46×10⁵ g polymer/g cat-bar-h.

### Example 9

(1) Preparation of COF5-supported zirconocene dichloride catalyst:
   Into a mixed solution formed with 40 ml of mesitylene and 40 ml of dioxane, 2,3,6,7,10,11-hexahydroxytriphenylene and benzene-1,4-diboronic acid in a weight ratio of 3:2, totaling 1g, were added, and reacted at 120°C for 72 hours, the product was washed with acetone three times to obtain COF5; the COF5 was activated at 300°C under nitrogen atmosphere for 6 hours; in a nitrogen-filled glove box, 100 mg of the activated COF5, 50 mg of zirconocene dichloride were dispersed in 500 ml of n-hexane, stirred and reacted at 60°C for 24 hours, filtered, washed with toluene, and dried at 50°C to obtain a COF5-supported zirconocene dichloride catalyst.
(2) Use of catalyst in ethylene slurry polymerization:
   A 2-liter autoclave was vacuumized at 140°C for 3 hours, 1.5 L of n-heptane was added to the autoclave, the ethylene pressure in the autoclave was adjusted to 45 bar, the temperature in the autoclave was adjusted to 50°C, and then 10 mg of the prepared COF5-supported zirconocene dichloride catalyst and 500 mg of methylaluminoxane were added, and reacted for 0.5 hours to obtain a polyethylene product with a polymerization activity of 2.3×10⁷ g polymer/g cat-bar-h.

### Example 10

(1) Preparation of COF5-supported zirconocene dichloride catalyst:
   COF5 (prepared according to the method in step (1) of Example 9) was activated at 150°C under a nitrogen atmosphere for 3 hours; in a glove box filled with nitrogen, 300 mg of the activated COF5 and 3 g of zirconocene dichloride were dispersed in 500 ml of n-hexane, stirred and reacted at 60°C for 72 hours, filtered, washed with toluene, dried under vacuum at 50°C to obtain a COF5-supported zirconocene dichloride catalyst.
(2) Use of catalyst in propylene slurry polymerization:
   A 2-liter autoclave was vacuumized at 140°C for 3 hours, 1.5L of n-hexane was added into the autoclave, the pressure of propylene in the autoclave was adjusted to 35bar, the temperature in the autoclave was adjusted to 60°C, and then 5 mg of the prepared COF5-supported zirconocene dichloride catalyst and 500 mg of triisobutylaluminum were added, and reacted for 0.5 hours to obtain a polypropylene product with a polymerization activity of 3.83×10⁶ g polymer/g cat-bar-h.

### Example 11

(1) Preparation of COF5-supported zirconocene dichloride catalyst:
   COF5 (prepared according to the method in step (1) of Example 9) was activated at 100°C under a nitrogen atmosphere for 12 hours; in a nitrogen-filled glove box, 100 mg of the activated COF5 and 500 mg of zirconocene dichloride were dispersed in 500 ml of n-hexane, stirred and reacted at 50°C for 48 hours, filtered, washed with toluene, and dried under vacuum at 50°C to obtain a COF5-supported zirconocene dichloride catalyst.
(2) Use of catalyst in ethylene/1-octene solution polymerization:
   A 2-liter autoclave was vacuumized at 140°C for 3 hours, 1.5 L of n-hexane was added into the autoclave, the ethylene pressure in the autoclave was adjusted to 15 bar, the temperature in the autoclave was adjusted to 40°C, and then 5 mg of the COF5-supported zirconocene dichloride catalyst, 500 mg of triethylaluminum, and 50 ml of octene were added, and reacted for 0.5 hours to obtain an ethylene/octene copolymer with a polymerization activity of 5.3×10⁶ g polymer/g cat·bar·h.

### Example 12

(1) Preparation of COF5-supported phenoxyimine titanium catalyst:
   COF5 (prepared according to the method in step (1) of Example 9) was activated at 300°C under vacuum condition for 6 hours; under the protection of nitrogen atmosphere, 1 g of the activated COF5 and 100 mg of triethylaluminum were dispersed into 500 ml of n-hexane, stirred and reacted at 15°C for 48 hours, filtered, washed with toluene, and dried under vacuum at 50°C to obtain pretreated COF5. In a glove box filled with nitrogen, 500 mg of the pretreated COF5 and 100 mg of phenoxyimine titanium (Structural Formula 1) were dispersed into 500 ml of chlorobenzene, stirred and reacted at 0°C for 72 hours, filtered, washed with toluene, dried under vacuum at 50°C to obtain a COF5-supported phenoxyimine titanium catalyst. 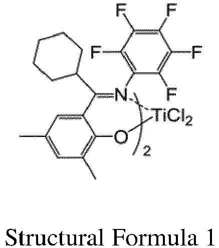
(2) Use of catalyst in ethylene slurry polymerization:
   A 2-liter autoclave was vacuumized at 140°C for 3 hours, 1.5L of n-hexane was added into the autoclave, the ethylene pressure in the autoclave was adjusted to 35bar, the temperature in the autoclave was adjusted to 50°C, and then 5 mg of the COF5-supported phenoxyimine titanium catalyst, 500 mg of methylaluminoxane were added, and reacted for 0.5 hours to obtain a polyethylene product with a polymerization activity of 6.1×10⁷ g polymer/g cat-bar-h.

### Example 13

(1) Preparation of COF5-supported phenoxyimine zirconium catalyst:
   COF5 (prepared according to the method in step (1) of Example 9) was activated at 400°C under nitrogen atmosphere for 12 hours; in a glove box filled with nitrogen, 500 mg of the activated COF5 and 50 mg of phenoxyimine zirconium were dispersed in 500 ml of n-hexane, stirred and reacted at 60°C for 48 hours, filtered, washed with toluene, and dried under vacuum at 50°C to obtain a COF5-supported phenoxyimine zirconium catalyst.
(2) Use of catalyst in ethylene/1-butene solution copolymerization:
   A 2-liter autoclave was vacuumized at 140°C for 3 hours, 1.5 L of n-hexane was added into the autoclave, the ethylene pressure in the autoclave was adjusted to 20 bar, the temperature in the autoclave was adjusted to 50°C, and then 5 mg of the prepared COF5-supported phenoxyimine zirconium catalyst, 500 mg of triethylaluminum were added, and 1-butene was introduced into the autoclave until the reaction pressure was 30 bar, and reacted for 0.5 hours to obtain an ethylene/1-butene copolymer with a polymerization activity of 6.2×10⁶ g polymer/g cat-bar-h.

### Example 14

(1) Preparation of COF5-supported diimine nickel catalyst:
   COF5 (prepared according to the method in step (1) of Example 9) was activated at 200°C under a nitrogen atmosphere for 4 hours; in a glove box filled with nitrogen, 200 mg of the activated COF5 and 50 mg of diimine nickel (Structural Formula 2) were dispersed into 500 ml of n-hexane, stirred and reacted at 60°C for 48 hours, filtered, washed with toluene, and dried under vacuum at 50°C to obtain a COF5-supported diimine nickel catalyst. 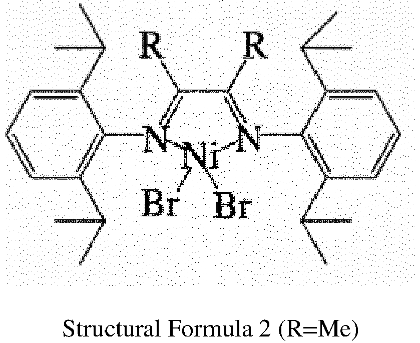
(2) Use of catalyst in ethylene solution polymerization:
   A 2-liter autoclave was vacuumized at 140°C for 3 hours, 1.5L of n-hexane was added into the autoclave, the ethylene pressure in the autoclave was adjusted to 35 bar, the temperature in the autoclave was adjusted to 50°C, and then 15 mg of the prepared COF5-supported diimine nickel catalyst and 500 mg of modified methylaluminoxane were added, and reacted for 0.5 hours to obtain a polyethylene product with a polymerization activity of 4.4×10⁶ g polymer/g cat-bar-h.

### Example 15

(1) Preparation of COF5-supported diimine palladium catalyst:
   COF5 (prepared according to the method in step (1) of Example 9) was activated at 300°C under vacuum conditions for 8 hours; under the protection of a nitrogen atmosphere, 1 g of the activated COF5 and 2g of trimethylaluminum were dispersed into 500 ml of n-hexane, stirred and reacted at 25°C for 48 hours, filtered, washed with toluene, and dried under vacuum at 50°C to obtain pretreated COF5. In a glove box filled with nitrogen, 500 mg of the pretreated COF5 and 500 mg of diimine palladium were dispersed in 500 ml of chlorobenzene, stirred and reacted at 50°C for 4 hours, filtered, washed with toluene, and dried under vacuum at 50°C to obtain a COF5-supported diimine palladium catalyst.
(2) Use of catalyst in ethylene solution polymerization:
   A 2-liter autoclave was vacuumized at 140°C for 3 hours, 1.5 L of n-hexane was added into the autoclave, the ethylene pressure in the autoclave was adjusted to 40 bar, the temperature in the autoclave was adjusted to 50°C, and then 10 mg of the COF5-supported diimine palladium catalyst, 500 mg of methylaluminoxane were added, and reacted for 0.5 hours to obtain a polyethylene product with a polymerization activity of 6×10⁶ g polymer/g cat-bar-h.

### Example 16

(1) Preparation of COF300-supported zirconocene dichloride catalyst:
   Into a mixed solution formed with 20 ml of acetic acid and 10 ml of dioxane, tetrakis(4-aminophenyl)methane and 1,4-phthalaldehyde in a weight ratio of 3:5, 0.8 grams in total, were added, and reacted at 120°C for 72 hours, the obtained product was washed three times with a mixed solution of tetrahydrofuran and dioxane in a ratio of 1:1 to obtain COF300; the COF300 was activated at 300°C under nitrogen condition for 6 hours; in a nitrogen-filled glove box, 500 mg of the activated COF300, 40 mg of zirconocene dichloride were dispersed in 500 ml of n-hexane, stirred and reacted at 80°C for 24 hours, filtered, washed with toluene, and dried under vacuum at 50°C to obtain a COF300-supported zirconocene dichloride catalyst.
(2) Use of catalyst in ethylene slurry polymerization:
   A 2-liter autoclave was vacuumized at 140°C for 3 hours, 1.5 L of n-heptane was added into the autoclave, the ethylene pressure in the autoclave was adjusted to 35 bar, the temperature in the autoclave was adjusted to 80°C, and then 40 mg of the prepared COF300-supported zirconocene dichloride catalyst and 600 mg of methylaluminoxane were added, and reacted for 0.5 hours to obtain a polyethylene product with a polymerization activity of 6.8×10⁶ g polymer/g cat-bar-h.

### Example 17

(1) Preparation of COF300-supported zirconocene dichloride catalyst:
   COF300 (prepared according to the method in step (1) of Example 16) was activated at 150°C under a nitrogen atmosphere for 3 hours. In a glove box filled with nitrogen, 200 mg of the activated COF300 and 2 g of zirconocene dichloride were dispersed into 500 ml of n-hexane, stirred and reacted at 60°C for 72 hours, filtered, washed with toluene, and dried under vacuum at 50°C to obtain a COF300-supported zirconocene dichloride catalyst.
(2) Use of catalyst in propylene slurry polymerization:
   A 2-liter autoclave was vacuumized at 140°C for 3 hours, 1.5L of n-hexane was added into the autoclave, the pressure of propylene in the autoclave was adjusted to 15bar, the temperature in the autoclave was adjusted to 70°C, and 5 mg of the COF300-supported zirconocene dichloride catalyst and 500 mg of triisobutylaluminum were added, reacted for 0.5 hours to obtain a polypropylene product with a polymerization activity of 9.7×10⁵ g polymer/g cat-bar-h.

### Example 18

(1) Preparation of COF300-supported zirconocene dichloride catalyst:
   COF300 (prepared according to the method in step (1) of Example 16) was activated at 100°C under a nitrogen atmosphere for 12 hours. In a glove box filled with nitrogen, 100 mg of the activated COF300 and 200 mg of zirconocene dichloride were dispersed into 500 ml of n-hexane, stirred and reacted at 50°C for 48 hours, filtered, washed with toluene, and dried under vacuum at 50°C to obtain a COF300-supported zirconocene dichloride catalyst.
(2) Use of catalyst in ethylene/1-butene solution polymerization:
   A 2-liter autoclave was vacuumized at 140°C for 3 hours, 1.5L of n-hexane was added into the autoclave, the ethylene pressure in the autoclave was adjusted to 20bar, the temperature in the autoclave was adjusted to 160°C, and 5 mg of the COF300-supported zirconocene dichloride catalyst, 400 mg of triethylaluminum were added, 1-butene was introduced into the autoclave until the reaction pressure was 30bar, and reaction was carried out for 0.5 hours to obtain an ethylene/1-butene copolymer with a polymerization activity of 2.25×10⁷ g polymer/g cat-bar-h.

### Example 19

(1) Preparation of COF300-supported phenoxyimine zirconium catalyst:
   COF300 (prepared according to the method in step (1) of Example 16) was activated at 300°C under vacuum condition for 6 hours; under the protection of nitrogen atmosphere, 1 g of the activated COF300 and 100 mg of triethylaluminum were dispersed into 500 ml of n-hexane, stirred and reacted at 15°C for 48 hours, filtered, washed with toluene, and dried under vacuum at 50°C to obtain pretreated COF300. In a nitrogen-filled glove box, 100 mg of the pretreated COF300 and 100 mg of phenoxyimine zirconium were dispersed in 300 ml of chlorobenzene, stirred and reacted at 5°C for 72 hours, filtered, washed with toluene, and dried under vacuum at 50°C to obtain a COF300-supported phenoxyimine zirconium catalyst.
(2) Use of catalyst in ethylene slurry polymerization:
   A 2-liter autoclave was vacuumized at 140°C for 3 hours, 1.5L of n-hexane was added into the autoclave, the ethylene pressure in the autoclave was adjusted to 25bar, the temperature in the autoclave was adjusted to 120°C, and 5 mg of the COF300-supported phenoxyimine zirconium catalyst and 200 mg of methylaluminoxane were added, and reacted for 0.5 hours to obtain a polyethylene product with a polymerization activity of 3.92×10⁷ g polymer/g cat-bar-h.

### Example 20

(1) Preparation of COF300-supported phenoxyimine zirconium catalyst:
   COF300 (prepared according to the method in step (1) of Example 16) was activated at 400°C under a nitrogen atmosphere for 12 hours. In a glove box filled with nitrogen, 500 mg of the activated COF300 and 50 mg of phenoxyimine zirconium were dispersed into 500 ml of n-hexane, stirred and reacted at 60°C for 48 hours, filtered, washed with toluene, and dried under vacuum at 50°C to obtain a COF300-supported phenoxyimine zirconium catalyst.
(2) Use of catalyst in ethylene/butadiene solution copolymerization:
   A 2-liter autoclave was vacuumized at 140°C for 3 hours, 1.5L of n-hexane was added into the autoclave, the ethylene pressure in the autoclave was adjusted to 20bar, the temperature in the autoclave was adjusted to 90°C, and 5 mg of the COF300-supported phenoxyimine zirconium catalyst, 500 mg of triethylaluminum were added, butadiene was introduced into the autoclave until the pressure of the autoclave was 30 bar, and the reaction was carried out for 0.5 hours to obtain an ethylene/butadiene copolymer with a polymerization activity of 8.9×10⁶ g polymer/g cat·bar·h.

### Example 21

(1) Preparation of COF300-supported diimine palladium catalyst:
   COF300 (prepared according to the method in step (1) of Example 16) was activated at 200°C under a nitrogen atmosphere for 4 hours. In a glove box filled with nitrogen, 200 mg of the activated COF300 and 20 mg of diimine palladium were dispersed into 500 ml of n-hexane, stirred and reacted at 60°C for 48 hours, filtered, washed with toluene, and dried under vacuum at 50°C to obtain a COF300-supported diimine palladium catalyst.
(2) Use of catalyst in ethylene solution polymerization:
   A 2-liter autoclave was vacuumized at 140°C for 3 hours, 1.5L of n-hexane was added into the autoclave, the ethylene pressure in the autoclave was adjusted to 35bar, the temperature in the autoclave was adjusted to 150°C, 35 mg of the COF300-supported diimine palladium catalyst and 500 mg of modified methylaluminoxane were added, and reacted for 0.5 hours to obtain a polyethylene product with a polymerization activity of 9.1×10⁴ g polymer/g cat-bar-h.

### Example 22

(1) Preparation of COF300-supported diimine palladium catalyst:
   COF300 (prepared according to the method in step (1) of Example 16) was activated at 300°C under vacuum conditions for 8 hours; under the protection of a nitrogen atmosphere, 1 g of the activated COF300 and 2g of trimethylaluminum were dispersed into 500 ml of n-hexane, stirred and reacted at 25°C for 48 hours, filtered, washed with toluene, and dried under vacuum at 50°C to obtain pretreated COF300. In a glove box filled with nitrogen, 500 mg of the pretreated COF300 and 500 mg of diimine palladium were dispersed into 500 ml of chlorobenzene, stirred and reacted at 50°C for 4 hours, filtered, washed with toluene, and dried under vacuum at 50°C to obtain a COF300-supported diimine palladium catalyst.
(2) Use of catalyst in ethylene solution polymerization:
   A 2-liter autoclave was vacuumized at 140°C for 3 hours, 1.5L of n-hexane was added into the autoclave, the ethylene pressure in the autoclave was adjusted to 40 bar, the temperature in the autoclave was adjusted to 180°C, 10 mg of the COF300-supported diimine palladium catalyst and 500 mg of methylaluminoxane were added, and reacted for 0.5 hours to obtain a polyethylene product with a polymerization activity of 4.4×10⁵ g polymer/g cat-bar-h.

### Example 23

(1) Preparation of COF303-supported zirconocene dichloride catalyst:
   Into a mixed solution of 20 ml of mesitylene and 20 ml of dioxane, tetrakis(4-formylphenyl)methane and 1,4-diaminobenzene in a weight ratio of 2:3, a total of 1g, were added and reacted at room temperature for 120 hours, the product was washed three times with n-hexane to obtain COF303; the COF303 was activated at 300°C under nitrogen condition for 6 hours; in a glove box filled with nitrogen, 500 mg of the activated COF303 and 40 mg of zirconocene dichloride were dispersed in 500 ml of n-hexane, stirred and reacted at 85°C for 24 hours, filtered, washed with toluene, and dried under vacuum at 50°C to obtain a COF303-supported zirconocene dichloride catalyst.
(2) Use of catalyst in ethylene slurry polymerization:
   A 2-liter autoclave was vacuumized at 140°C for 3 hours, 1.5L of n-heptane was added into the autoclave, the ethylene pressure in the autoclave was adjusted to 35 bar, the temperature in the autoclave was adjusted to 80°C, and 40 mg of the COF303-supported zirconocene dichloride catalyst and 600 mg of methylaluminoxane were added, and reacted for 0.5 hours to obtain a polyethylene product with a polymerization activity of 2.3×10⁶ g polymer/g cat-bar-h.

### Example 24

(1) Preparation of COF303-supported zirconocene dichloride catalyst:
   COF303 (prepared according to the method in step (1) of Example 23) was activated at 150°C under nitrogen conditions for 3 hours; in a glove box filled with nitrogen, 200 mg of the activated COF303 and 2 g of zirconocene dichloride were dispersed into 500 ml of n-hexane, stirred and reacted at 60°C for 72 hours, filtered, washed with toluene, and dried under vacuum at 50°C to obtain a COF303-supported zirconocene dichloride catalyst.
(2) Use of catalyst in propylene slurry polymerization:
   A 2-liter autoclave was vacuumized at 140°C for 3 hours, 1.5L of n-hexane was added into the autoclave, the pressure of propylene in the autoclave was adjusted to 35bar, the temperature in the autoclave was adjusted to 90°C, and 5 mg of the COF303-supported zirconocene dichloride catalyst and 500 mg of triisobutylaluminum were added, and reacted for 0.5 hours to obtain a polypropylene product with a polymerization activity of 5.92×10⁶ g polymer/g cat-bar-h.

### Example 25

(1) Preparation of COF303-supported zirconocene dichloride catalyst:
   COF303 (prepared according to the method in step (1) of Example 23) was activated at 100°C under nitrogen conditions for 12 hours; in a glove box filled with nitrogen, 100 mg of the activated COF303 and 200 mg of zirconocene dichloride were dispersed into 500 ml of n-hexane, stirred and reacted at 50°C for 48 hours, filtered, washed with toluene, and dried under vacuum at 50°C to obtain a COF303-supported zirconocene dichloride catalyst.
(2) Use of catalyst in ethylene/1-octene solution polymerization:
   A 2-liter autoclave was vacuumized at 140°C for 3 hours, 1.5L of n-hexane was added into the autoclave, the ethylene pressure in the autoclave was adjusted to 30bar, the temperature in the autoclave was adjusted to 160°C, and 5 mg of the COF303-supported zirconocene dichloride catalyst, 400 mg of triethylaluminum and 50 ml of octene were added, and reacted for 0.5 hours to obtain an ethylene/octene copolymer with a polymerization activity of 6.83×10⁶ g polymer/g cat·bar·h.

### Example 26

(1) Preparation of COF303-supported phenoxyimine zirconium catalyst:
   COF303 (prepared according to the method in step (1) of Example 23) was activated at 300°C under vacuum condition for 6 hours; under the protection of nitrogen atmosphere, 1 g of the activated COF303 and 100 mg of triethylaluminum were dispersed into 500 ml of n-hexane, stirred and reacted at 15°C for 48 hours, filtered, washed with toluene, and dried under vacuum at 50°C to obtain pretreated COF303; in a glove box filled with nitrogen, 100 mg of the pretreated COF303 and 100 mg of phenoxyimine zirconium were dispersed into 300 ml of chlorobenzene, stirred and reacted at 5°C for 72 hours, filtered, washed with toluene, and dried under vacuum at 50°C to obtain a COF303-supported phenoxyimine zirconium catalyst.
(2) Use of catalyst in ethylene slurry polymerization:
   A 2-liter autoclave was vacuumized at 140°C for 3 hours, 1.5L of n-hexane was added into the autoclave, the ethylene pressure in the autoclave was adjusted to 20bar, the temperature in the autoclave was adjusted to 140°C, and 5 mg of the COF303-supported phenoxyimine zirconium catalyst and 200 mg of methylaluminoxane were added, and reacted for 0.5 hours to obtain a polyethylene product with a polymerization activity of 4.1×10⁶ g polymer/g cat-bar-h.

### Example 27

(1) Preparation of COF303-supported phenoxyimine zirconium catalyst:
   COF303 (prepared according to the method in step (1) of Example 23) was activated at 400°C under nitrogen conditions for 12 hours; in a glove box filled with nitrogen, 500 mg of the activated COF303 and 50 mg of phenoxyimine zirconium were dispersed into 500 ml of n-hexane, stirred and reacted at 60°C for 48 hours, filtered, washed with toluene, and dried under vacuum at 50°C to obtain a COF303-supported phenoxyimine zirconium catalyst.
(2) Use of catalyst in ethylene/1-octene solution copolymerization:
   A 2-liter autoclave was vacuumized at 140°C for 3 hours, 1.5L of n-hexane was added into the autoclave, the ethylene pressure in the autoclave was adjusted to 25bar, the temperature in the autoclave was adjusted to 100°C, and 5 mg of the COF303-supported phenoxyimine zirconium catalyst, 500 mg of triethylaluminum and 50 ml of octene were added, and reacted for 0.5 hours to obtain an ethylene/octene copolymer with a polymerization activity of 5.2×10⁶ g polymer/g cat·bar·h.

### Example 28

(1) Preparation of COF303-supported diimine palladium catalyst:
   COF303 (prepared according to the method in step (1) of Example 23) was activated at 200°C under nitrogen for 4 hours; in a glove box filled with nitrogen, 200 mg of the activated COF303 and 20 mg of diimine palladium were dispersed into 500 ml of n-hexane, stirred and reacted at 60°C for 48 hours, filtered, washed with toluene, and dried under vacuum at 50°C to obtain a COF303-supported diimine palladium catalyst.
(2) Use of catalyst in ethylene solution polymerization:
   A 2-liter autoclave was vacuumized at 140°C for 3 hours, 1.5L of n-hexane was added into the autoclave, the ethylene pressure in the autoclave was adjusted to 15 bar, the temperature in the autoclave was adjusted to 140°C, and 35 mg of the COF303-supported diimine palladium catalyst and 500 mg of modified methylaluminoxane were added, and reacted for 0.5 hours to obtain a polyethylene product with a polymerization activity of 5.2×10⁶ g polymer/g cat-bar-h.

### Example 29

(1) Preparation of COF303-supported diimine palladium catalyst:
   COF303 (prepared according to the method in step (1) of Example 23) was activated at 300°C under vacuum conditions for 8 hours; under the protection of a nitrogen atmosphere, 1 g of the activated COF303 and 2g of trimethylaluminum were dispersed into 500 ml of n-hexane, stirred and reacted at 25°C for 48 hours, filtered, washed with toluene, and dried under vacuum at 50°C to obtain pretreated COF303. In a nitrogen-filled glove box, 500 mg of the pretreated COF303 and 500 mg of diimine palladium were dispersed in 500 ml of chlorobenzene, stirred and reacted at 50°C for 4 hours, filtered, washed with toluene, and dried under vacuum at 50°C to obtain a COF303-supported diimine palladium catalyst.
(2) Use of catalyst in ethylene solution polymerization:
   A 2-liter autoclave was vacuumized at 140°C for 3 hours, 1.5L of n-hexane was added into the autoclave, the ethylene pressure in the autoclave was adjusted to 35 bar, the temperature in the autoclave was adjusted to 120°C, 10 mg of COF303-supported diimine palladium catalyst and 500 mg of methylaluminoxane were added, and reacted for 0.5 hours to obtain a polyethylene product with a polymerization activity of 6.6×10⁶ g polymer/g cat-bar-h.

### Example 30

(1) Preparation of COF1-supported titanium tetrachloride catalyst:
   Into a mixed solution formed with 40 ml of mesitylene and 40 ml of dioxane, 5 ml of benzene-1,4-diboronic acid was added, and reacted at 120°C for 72 hours to obtain COF1; the COF1 was activated at 300°C under vacuum condition for 6 hours; in a glove box filled with nitrogen, 500 mg of the activated COF1, 50 mg of titanium tetrachloride and 500 ml of chlorobenzene were mixed, stirred and reacted at 0°C for 72 hours, filtered, washed with toluene, and dried under vacuum at 50°C to obtain a COF1-supported titanium tetrachloride catalyst.
(2) Use of catalyst in ethylene slurry homopolymerization:
   A 2-liter autoclave was vacuumized at 140°C for 3 hours, 1.5L of n-hexane was added into the autoclave, the ethylene pressure in the autoclave was adjusted to 40 bar, the temperature in the autoclave was adjusted to 50°C, and then 20 mg of the COF1-supported titanium tetrachloride catalyst and 500 mg of triethylaluminum were added, and reacted for 0.5 hours to obtain a polyethylene product with a polymerization activity of 8.3×10⁵ g polymer/g cat-bar-h.

It could be seen that the polymerization activity of the COF1-supported titanium tetrachloride catalyst of Example 1 was two orders of magnitude higher than that of the COF1-supported titanium tetrachloride catalyst of Example 30, indicating that the polymerization activity of the COF1-supported titanium tetrachloride catalyst of the present invention was significantly higher.

### Comparative Example 1

(1) Preparation of silica-supported zirconocene dichloride catalyst:
   Silica was activated at 300°C under nitrogen atmosphere for 6 hours; in a nitrogen-filled glove box, 100 mg of the activated silica, 100 mg of dry methylaluminoxane, and 50 mg of zirconocene dichloride were dispersed in 500 ml of n-hexane, stirred and reacted at 60°C for 24 hours, filtered, washed with toluene, and dried at 50°C to obtain a silica-supported zirconocene dichloride catalyst.
(2) Use of catalyst in ethylene slurry polymerization:
   A 2-liter autoclave was vacuumized at 140°C for 3 hours, 1.5L of n-heptane was added into the autoclave, the ethylene pressure in the autoclave was adjusted to 45 bar, the temperature in the autoclave was adjusted to 50°C, and then 10 mg of the prepared silica-supported zirconocene dichloride catalyst and 500 mg of methylaluminoxane were added, and reacted for 0.5 hours to obtain a polyethylene product with a polymerization activity of 2.3×10⁵ g polymer/g cat-bar-h.

It could be seen that the polymerization activity of the catalyst of Example 9 was much higher than that of the catalyst of Comparative Example 1.

### Comparative Example 2

Use of zirconocene dichloride catalyst in ethylene slurry polymerization:
A 2-liter autoclave was vacuumized at 140°C for 3 hours, 1.5L of n-heptane was added into the autoclave, the ethylene pressure in the autoclave was adjusted to 45 bar, the temperature in the autoclave was adjusted to 50°C, and then 10 mg of zirconocene dichloride catalyst and 500 mg of methylaluminoxane were added, and reacted for 0.5 hours to obtain a polyethylene product with a polymerization activity of 9.3×10⁵ g polymer/g cat-bar-h.

It could be seen that the polymerization activity of the catalyst in Example 9 was much higher than that of the zirconocene dichloride catalyst.

Finally, it should be noted that: the above examples are only used to illustrate the technical solutions of the present invention and not to limit them; although the present invention has been described in detail with reference to the preferred examples, those of ordinary skill in the art should understand that: the examples of the present invention can still be modified or subjected to equivalent replacement of some technical features without departing from the spirit of the technical solutions of the present invention, and these changes should fall within the scope of the technical solutions sought to be protected by the present invention.

## Claims

1. A method for preparing a supported olefin polymerization catalyst, which is Method I or Method II, wherein,
the Method I comprises the following steps:
(1) under the protection of an inert atmosphere or vacuum, activating a COF at 0°C to 800°C for 0.1 to 48 hours;
(2) under the protection of an inert atmosphere or vacuum, reacting the activated COF with an olefin polymerization catalyst at -30°C to 150°C in a reaction medium, performing solid-liquid separation, collecting a solid phase, optionally washing and drying the solid phase sequentially, thereby obtaining a supported olefin polymerization catalyst;
the Method II comprises the following steps:
1) under the protection of an inert atmosphere or vacuum, activating a COF at 0°C to 800°C for 0.1 to 48 hours;
2) under the protection of an inert atmosphere or vacuum, reacting the activated COF with a promoter at 5°C to 120°C in a reaction medium, performing solid-liquid separation, and collecting a solid phase; wherein, the promoter is selected from the group consisting of metal alkyl compound, fluoro-borane, alkylaluminum oxide, modified methylaluminoxane, Lewis acid and Grignard reagent; optionally, washing the solid phase, and drying to obtain a dry product;
3) under the protection of an inert atmosphere or vacuum, reacting the solid phase or the optionally obtained dry product with an olefin polymerization catalyst at -30°C to 150°C in a reaction medium, performing solid-liquid separation, collecting a solid phase, optionally washing and drying the solid phase sequentially, thereby obtaining a supported olefin polymerization catalyst.

2. The method according to claim 1, wherein, in step 2), the promoter is selected from the group consisting of methylaluminoxane, modified methylaluminoxane, ethylaluminoxane, trimethylaluminum, triethylaluminum, tris(pentafluorophenyl)borane and triisobutylaluminum.

3. The method according to claim 1 or 2, wherein, in step 2), the weight ratio of the activated COF to the promoter is (0.05 to 30):1.

4. The method according to any one of claims 1 to 3, wherein, in step 2), the ratio of the activated COF to the reaction medium is 1:(100 to 1000) g/mL.

5. The method according to any one of claims 1 to 4, wherein, in step (2), the weight ratio of the activated COF to the olefin polymerization catalyst is (0.05 to 120):1; or in step 3), the weight ratio of the solid phase or the optionally obtained dry product to the olefin polymerization catalyst is (0.05 to 120):1.

6. The method according to any one of claims 1 to 5, wherein, in step (2) and/or step 3), the ratio of the olefin polymerization catalyst to the reaction medium is (0.001 to 1000):1 mg/ ml.

7. The method according to any one of claims 1 to 6, wherein, in step (1) and/or step 1), the COF is selected from the group consisting of imine-based COF, imide-based COF, borate ester-based COF, sp²-based COF, hydrazone-based COF, boroxine-based COF, borazine-based COF, triazine-based COF, and phenazine-based COF;
preferably, the COF is selected from the group consisting of COF1, COF300, COF303, CTF1, COF5 and COF-LZU1.

8. The method according to any one of claims 1 to 7, wherein, in step (2) and/or step 3), the olefin polymerization catalyst is selected from the group consisting of Z-N catalyst, metallocene catalyst and post-metallocene catalyst;
preferably, the olefin polymerization catalyst is selected from the group consisting of titanium tetrachloride, titanium trichloride, zirconium trichloride, vanadium trichloride, zirconocene dichloride, biscyclopentadienyl dimethyl hafnium, bis(indenyl) dimethyl zirconium, rac-vinylidene-bridged bis(indenyl) zirconium dichloride, dimethylsilylene-bridged bis(indenyl), diphenylcarbene-bridged cyclopentadienyl-fluorenyl zirconium dichloride, dimethylsilylene-bridged tetramethylcyclopentadienyl-tert-butylamino-dimethyl titanium, bis(indenyl) zirconium dichloride, bis[2-(3',5'-di(tert-butyl)phenyl)-indenyl] zirconium dichloride, bis(2-methyl-4,5-phenyl-indenyl) zirconium dichloride, biscyclopentadienyl-bis(phenoxy) zirconium, dimethylsilylene-bridged bis(indenyl) zirconium dichloride, diphenylcarbene-bridged cyclopentadienyl-fluorenyl zirconium dichloride, diphenylcarbene-bridged cyclopentadienyl-(2-dimethylamino-fluorenyl) zirconium dichloride, dimethylsilylene-bridged tetramethylcyclopentadienyl-tert-butylamino-dimethyl titanium, dimethylsilylene-bridged 3-pyrrolylindenyl-tert-butylamino-dimethyl titanium, rac-dimethylsilylene-bridged bis(2-methylindenyl) zirconium dichloride and dimethylsilylene-bridged fluorenyl-tert-butylamino-dimethyl titanium, imine-amine-based catalyst, ketimine-based catalyst, amidine-based catalyst, diimine palladium/nickel-based catalyst, phenoxyimine-based catalyst;
more preferably, the olefin polymerization catalyst is selected from the group consisting of titanium tetrachloride, titanium trichloride, zirconocene dichloride, silyl(N-tert-butylamino) (tetramethylcyclopentadienyl) titanium dichloride, phenoxyimine zirconium, rac-dimethylsilylene-bridged bis(2-methylindenyl) zirconium dichloride, dimethylsilylene-bridged-fluorenyl-tert-butylamino-dimethyl titanium, rac-vinylidene-bridged bis(indenyl) zirconium dichloride, diimine palladium, phenoxyimine titanium and diimine nickel.

9. The method according to any one of claims 1 to 8, wherein the reaction medium in step (2) and steps 2) to 3) is a non-polar organic solvent;
preferably, the reaction medium in step (2) and steps 2) to 3) is independently one selected from the group consisting of aliphatic compounds containing 5-12 carbon atoms, cycloaliphatic compounds containing 6-12 carbon atoms, aromatic compounds containing 6-12 carbon atoms and halides thereof, and ether compounds containing 4-12 carbon atoms; or a mixture thereof;
more preferably, the reaction medium in step (2) and steps 2) to 3) is independently one selected from n-hexane, n-heptane, n-octane, n-dodecane, cyclohexane, toluene, xylene, mesitylene, chlorobenzene, 1,2,4-trichlorobenzene and diethyl ether; or a mixture thereof.

10. The method according to any one of claims 1 to 9, wherein the inert atmosphere in step (1) and step 1) is independently selected from the group consisting of nitrogen, argon, helium and supercritical carbon dioxide; the inert atmosphere in step (2) and steps 2) to 3) is independently selected from the group consisting of nitrogen, argon and helium.

11. The method according to any one of claims 1 to 10, **characterized by** one or more of the following 1) to 8):
1) in step 2), the reaction is carried out for a time period of 0.5 to 90 hours;
2) in step 2), the washing is carried out with toluene;
3) in step 2), the drying is carried out at a temperature of 40°C to 70°C;
4) in step (2) and/or step 3), the reaction is carried out for a time period of 0.1 to 110 hours;
5) in step (2) and/or step 3), the washing is carried out with toluene;
6) in step (2) and/or step 3), the drying is carried out under vacuum conditions;
7) in step (2) and/or step 3), the drying is carried out at a temperature of 40°C to 70°C;
8) in step (2) and steps 2) to 3), the solid-liquid separation is carried out by filtration.

12. A supported olefin polymerization catalyst, which is prepared by the method according to any one of claims 1 to 11;
preferably, the supported olefin polymerization catalyst has a polymerization activity of 10³ to 10¹⁰ g polymer/g cat-bar-h at 0°C to 200°C;
preferably, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms;
more preferably, the olefin is selected from the group consisting of ethylene, propylene, 1-butene, butadiene, 1-hexene, 1-octene and styrene.

13. A catalyst product for olefin polymerization, comprising the supported olefin polymerization catalyst according to claim 12 and optionally a co-catalyst;
preferably, the co-catalyst is selected from the group consisting of triethylaluminum, methylaluminoxane, triisobutylaluminum and modified methylaluminoxane;
preferably, the weight ratio of the supported olefin polymerization catalyst to the co-catalyst is 1:(1 to 125).

14. A method for olefin polymerization, comprising using the supported olefin polymerization catalyst according to claim 12 or the catalyst product according to claim 13 to catalyze olefin polymerization.

15. The method according to claim 14, wherein the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms;
preferably, the olefin is selected from the group consisting of ethylene, propylene, 1-butene, butadiene, 1-hexene, 1-octene and styrene.

16. The method according to claim 14, wherein the olefin polymerization is selected from the group consisting of olefin gas-phase polymerization, olefin solution polymerization, olefin bulk polymerization and olefin slurry polymerization.

17. Use of the supported olefin polymerization catalyst according to claim 12 or the catalyst product according to claim 13 in catalyzing olefin polymerization;
preferably, the olefin polymerization is selected from the group consisting of olefin gas-phase polymerization, olefin solution polymerization, olefin bulk polymerization and olefin slurry polymerization.

18. The use according to claim 17, wherein the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms;
preferably, the olefin is selected from the group consisting of ethylene, propylene, 1-butene, butadiene, 1-hexene, 1-octene and styrene.

19. The supported olefin polymerization catalyst according to claim 12 or the catalyst product according to claim 13, for use in catalyzing olefin polymerization;
preferably, the olefin polymerization is selected from the group consisting of olefin gas-phase polymerization, olefin solution polymerization, olefin bulk polymerization and olefin slurry polymerization.

20. The supported olefin polymerization catalyst or catalyst product according to claim 19, wherein the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms;
preferably, the olefin is selected from the group consisting of ethylene, propylene, 1-butene, butadiene, 1-hexene, 1-octene and styrene.
